# EUROPÄISCHE PATENTANMELDUNG

(11) **EP 4 353 536 A1**
(43) Veröffentlichungstag der Anmeldung: **17.04.2024**
(21) Anmeldenummer: 23200301.2
(22) Anmeldetag: 28.09.2023
(51) Int. Cl.: B60P 3/00

(54) **FAHRANTRIEB UND TRANSPORTFAHRZEUG**

(30) Priorität: 12.10.2022 DE 102022210771
(71) Anmelder: Scheuerle Fahrzeugfabrik GmbH, 74629 Pfedelbach (DE)
(72) Erfinder: Braun, Lukas, 91595 Burgoberbach (DE); Kammerleitner, Ronny, 74629 Pfedelbach (DE); Schmalzbauer, Jens, 74639 Zweiflingen (DE)
(74) Vertreter: Ullrich & Naumann PartG mbB

(57) **Zusammenfassung**

Ein Fahrantrieb, insbesondere Schwerlast-Fahrantrieb, für ein Transportfahrzeug (16) mit mindestens zwei Drehgestellen (1), wobei jedes Drehgestell (1) eine Schwerlastpendelachse mit einem Achskörper (2) aufweist, wobei an einem ersten Ende (3) und an einem zweiten Ende (4) des Achskörpers (2) jeweils mindestens ein Rad (5, 5') angeordnet ist, dadurch gekennzeichnet, dass für jedes Drehgestell (1) jeweils eine von einem separaten Elektromotor (6) angetriebene Hydraulikpumpe (7) und mindestens ein Hydraulikmotor (9, 15, 15') zum Antreiben mindestens eines Rades (5, 5') des Drehgestells (1) angeordnet ist, wobei die Hydraulikpumpe (7) über mindestens eine Hydraulikleitung (8) mit dem Hydraulikmotor (9, 15, 15') verbindbar ist. Des Weiteren ist ein Transportfahrzeug (16) beschrieben.

## Beschreibung

Die Erfindung betrifft einen Fahrantrieb, insbesondere Schwerlast-Fahrantrieb, für ein Transportfahrzeug mit mindestens zwei Drehgestellen, wobei jedes Drehgestell eine Schwerlastpendelachse mit einem Achskörper aufweist, wobei an einem ersten Ende und an einem zweiten Ende des Achskörpers jeweils mindestens ein Rad angeordnet ist.

Des Weiteren betrifft die Erfindung ein Transportfahrzeug.

Fahrantriebe und Transportfahrzeuge mit Drehgestellen, die Schwerlastpendelachsen aufweisen, sind seit Jahren aus der Praxis bekannt und werden zum Transport von schweren Lasten, beispielsweise Industrieanlagen, Schiffe, Schiffssektionen, Turbinen etc. verwendet. Insbesondere sind sog. selbstangetriebene Transportfahrzeuge ("self-propelled modular transporter" SPMT) bekannt geworden, welche den Transport von ausladenden und extrem schweren Lasten ermöglichen. Diese Transportfahrzeuge weisen üblicherweise hydrostatische Antriebe auf, die über eine zentrale Pumpeneinheit betrieben werden. Die zentrale Pumpeneinheit wird wiederum über Verbrennungsmotoren, Elektroantriebe oder Hybridantriebe betrieben. Hierzu sind die zentrale Pumpeneinheit und die hydrostatischen Antriebe mittels entsprechender Hydraulikleitungen verbunden. Des Weiteren ermöglichen es bekannte Schwerlastpendelachsen Bodenunebenheiten auszugleichen und die Nutzlast gleichmäßig auf mehrere Achsen zu verteilen, so dass schwere Lasten besonders straßenschonend transportierbar sind.

Entsprechende Transportfahrzeuge weisen insgesamt den Vorteil auf, dass ein sicherer Transport der schweren und ausladenden Lasten zuverlässig möglich ist und dass diese miteinander koppelbar ausgebildet sind, so dass eine Anpassung der Transportfahrzeuge an die Ladung gegeben ist. Ein Nachteil der bekannten Transportfahrzeuge bzw. der bekannten Drehgestelle besteht in dem hohen Energiebedarf.

Der vorliegenden Erfindung liegt daher die Aufgabe zugrunde, einen Fahrantrieb und ein Transportfahrzeug der eingangs genannten Art derart auszugestalten und weiterzubilden, dass mit konstruktiv einfachen Mitteln ein energieeffizienter Antrieb von mit der Schwerlastpendelachse verbundenen Rädern möglich ist.

Erfindungsgemäß wird die voranstehende Aufgabe durch die Merkmale des Anspruches 1 gelöst. Danach ist der in Rede stehende Fahrantrieb, insbesondere Schwerlast-Fahrantrieb, für ein Transportfahrzeug mit mindestens zwei Drehgestellen, wobei jedes Drehgestell eine Schwerlastpendelachse mit einem Achskörper aufweist, wobei an einem ersten Ende und an einem zweiten Ende des Achskörpers jeweils mindestens ein Rad angeordnet ist, dadurch gekennzeichnet, dass für jedes Drehgestell jeweils eine von einem separaten Elektromotor angetriebene Hydraulikpumpe und mindestens ein Hydraulikmotor zum Antreiben mindestens eines Rades des Drehgestells angeordnet ist, wobei die Hydraulikpumpe über mindestens eine Hydraulikleitung mit dem Hydraulikmotor verbindbar ist.

In Bezug auf das Transportfahrzeug wird die zugrundeliegende Aufgabe durch die Merkmale von Anspruch 10 gelöst. Damit ist ein Transportfahrzeug, insbesondere ein selbstangetriebenes Transportfahrzeug, mit mindestens einem Fahrantrieb nach einem der Ansprüche 1 bis 9 angegeben.

In erfindungsgemäßer Weise ist zunächst erkannt worden, dass bei der Anordnung einer zentralen Pumpeneinheit aufgrund der Vielzahl von Einbauten sowie der langen Hydraulikleitungen energetische Verluste auftreten. Diese Verluste steigen durch den regelungstechnischen Aufwand weiter an, wenn die Hydraulikmotoren mit unterschiedlichen Drehzahlen und Drehmomenten betrieben werden sollen, um zum Beispiel Torque-Vectoring zu ermöglich. In weiter erfindungsgemäßer Weise ist erkannt worden, dass die Effizienz des hydraulischen Antriebs erheblich verbessert werden kann, indem die Antriebshydraulik an jedem Drehgestelle bzw. an jeder Schwerlastpendelachse mit einem eigenen, d.h. separaten, Elektromotor und einer eigenen Hydraulikpumpe ausgebildet wird. Somit weist jedes Drehgestell einen eigenen, dezentralen Antrieb auf. Durch diese konstruktive Maßnahme kann die Länge der Hydraulikleitungen zwischen Hydraulikpumpe und Hydraulikmotor erheblich verkürzt werden, so dass Leitungsverluste verringert werden. Des Weiteren ist ein erfindungsgemäßer Fahrantrieb wesentlich einfacher in der Konstruktion als die aus dem Stand der Technik bekannten Vorrichtungen, bei welchen eine zentrale Hydraulikpumpeneinheit vorgesehen ist. Ein weiterer Vorteil der erfindungsgemäßen Lehre besteht darin, dass ein Troque-Vectoring ermöglicht ist.

Bei dem Transportfahrzeug kann es sich insbesondere um ein beliebiges Schwerlastfahrzeug handeln, beispielsweise um ein selbstangetriebenes Transportfahrzeug (SPMT), einen Industriehubtransporter (IHT), einen Sektionshubtransporter (SHT) etc.

In vorteilhafter Weise kann der mindestens eine Hydraulikmotor als, vorzugsweise variabler, Axialkolbenmotor ausgebildet sein. Entsprechende Motoren weisen eine hohe Leistungsdichte auf und sind relativ einfach zu regeln. Als variabler Axialkolbenmotor wird dabei ein Axialkolbenmotor mit variablem Schluckvolumen bezeichnet.

In weiter vorteilhafter Weise kann die Hydraulikpumpe als, vorzugsweise konstante, Axialkolbenpumpe oder als, vorzugsweise konstante, Außenzahnraddoppelpumpe ausgebildet sein.

Zur Stromversorgung des Elektromotors kann in vorteilhafter Weise ein Wechselrichter angeordnet sein. Des Weiteren ist es denkbar, dass der Wechselrichter als Teil einer Leistungssteuerung des Elektromotors ausgebildet ist.

Gemäß einer vorteilhaften Ausgestaltung könnte bzw. könnten die Hydraulikpumpe und/oder der Wechselrichter und/oder der Elektromotor an einem Fahrzeugrahmen angeordnet sein. Die Befestigung am Fahrzeugrahmen ist von Vorteil, da dieser ausreichend Raum bietet, so dass die Montage und eine etwaige Wartung mit geringem Aufwand durchzuführen sind. Des Weiteren können die Komponenten sicher an dem Fahrzeugrahmen gehalten werden und sind somit vor Beschädigungen geschützt.

In vorteilhafter Weise kann für jede Schwerlastpendelachse ein gemeinsamer Hydraulikmotor als gemeinsamer Antrieb für die an dem ersten Ende und dem zweiten Ende des Achskörpers angeordneten Räder angeordnet sein. Somit weist zwar jedes Drehgestell einen eigenen, dezentralen Antrieb auf, jedoch wird nur eine geringe Anzahl von Hydraulikmotoren und weiteren Komponenten benötigt. Bei einer solchen Ausgestaltung ist es des Weiteren denkbar und von Vorteil, wenn dem gemeinsamen Hydraulikmotor ein Getriebe, insbesondere ein Differentialgetriebe, nachgeordnet ist. Eine entsprechende Konstruktion ermöglicht es, die an dem ersten Ende und dem zweiten Ende des Achskörpers angeordneten Räder mit unterschiedlicher Drehzahl bei gleichem Drehmoment anzutreiben.

Gemäß einer weiteren vorteilhaften Ausgestaltung kann für jedes Drehgestell ein separater Hydraulikmotor für das mindestens eine an dem ersten Ende des Achskörpers angeordnete Rad vorgesehen sein und ein separater Hydraulikmotor für das mindestens eine an dem zweiten Ende des Achskörpers angeordnete Rad vorgesehen sein. Mit anderen Worten sind zwei Hydraulikmotoren angeordnet, die jeweils das mindestens eine Rad eines Endes des Achskörpers antreiben. Die Hydraulikmotoren eines Drehgestells können über eine gemeinsame Hydraulikpumpe angetrieben werden, die wiederum über einen Elektromotor angetrieben wird. Dadurch lässt sich die Ansteuerung der Räder mit geringem konstruktiven Aufwand vereinfachen.

In weiter vorteilhafter Weise kann dem mindestens einen Rad an dem ersten Ende des Achskörpers ein Getriebe, insbesondere ein Planetengetriebe, vorgeordnet sein und kann dem mindestens einen Rad an dem zweiten Ende des Achskörpers ein Getriebe, insbesondere ein Planetengetriebe, vorgeordnet sein. Die Getriebe dienen somit jeweils dazu, das Drehmoment von dem Hydraulikmotor auf das Rad zu übertragen, wobei das Drehmoment entsprechend der zu transportierenden, schweren Lasten angepasst werden kann.

Gemäß einer vorteilhaften Ausgestaltung können an dem ersten Ende und dem zweiten Ende des Achskörpers jeweils mindestens ein Rad, vorzugsweise Zwillingsräder, angeordnet sein. Alternativ oder zusätzlich kann eine Längsschwinge mit dem Achskörper über das Pendellager drehbar gekoppelt sein. Die Längsschwinge kann mit einem Lagerarm schwenkbar gekoppelt sein, so dass eine schwenkbare Lagerung der Schwerlastpendelachse um eine horizontale Achse realisiert ist. Des Weiteren könnte der Lagerarm drehbar mit einem Fahrzeugrahmen koppelbar sein. Hierzu könnte ein Zahnkranz oder ein Zapfen bzw. eine Zapfenaufnahme an dem Lagerarm ausgebildet sein. Ein Zahnkranz hat den Vorteil, dass eine aktive Lenkung ermöglicht wird. Die Kopplung über einen Zapfen bzw. eine Zapfenaufnahme ist einfach zu realisieren und kann in vorteilhafter Weise genutzt werden, falls keine aktive Lenkung notwendig ist.

In vorteilhafter Weise könnte eine Energieversorgungseinheit, die beispielsweise eine oder mehrere Batterien und/oder einer oder mehrerer Brennstoffzellen zur Stromversorgung der Elektromotoren aufweist, an dem Fahrzeug angeordnet und mit dem Elektromotor bzw. den Elektromotoren wirkverbunden sein. Alternativ ist es denkbar, dass die Energieversorgungseinheit auf einem separaten Fahrzeug angeordnet und mit dem Elektromotor bzw. den Elektromotoren wirkverbunden ist. Das Fahrzeug kann mit dem Transportfahrzeug koppelbar ausgebildet sein und von dem Transportfahrzeug geschleppt werden oder über einen eigenen Antrieb verfügen.

Es gibt nun verschiedene Möglichkeiten, die Lehre der vorliegenden Erfindung in vorteilhafter Weise auszugestalten und weiterzubilden. Dazu ist einerseits auf die dem Anspruch 1 nachgeordneten Ansprüche und andererseits auf die nachfolgende Erläuterung bevorzugter Ausführungsbeispiele der Erfindung anhand der Zeichnung zu verweisen. In Verbindung mit der Erläuterung der bevorzugten Ausführungsbeispiele der Erfindung anhand der Zeichnung werden auch im Allgemeinen bevorzugte Ausgestaltungen und Weiterbildungen der Lehre erläutert. In der Zeichnung zeigen
- Fig. 1: in einer schematischen Darstellung ein Ausführungsbeispiel eines Fahrantriebs,
- Fig. 2: in einer schematischen Darstellung ein weiteres Ausführungsbeispiel eines Fahrantriebs,
- Fig. 3: in einer schematischen Darstellung ein Ausführungsbeispiel eines Transportfahrzeugs, und
- Fig. 4: in einer schematischen Darstellung ein weiteres Ausführungsbeispiel eines Transportfahrzeugs.

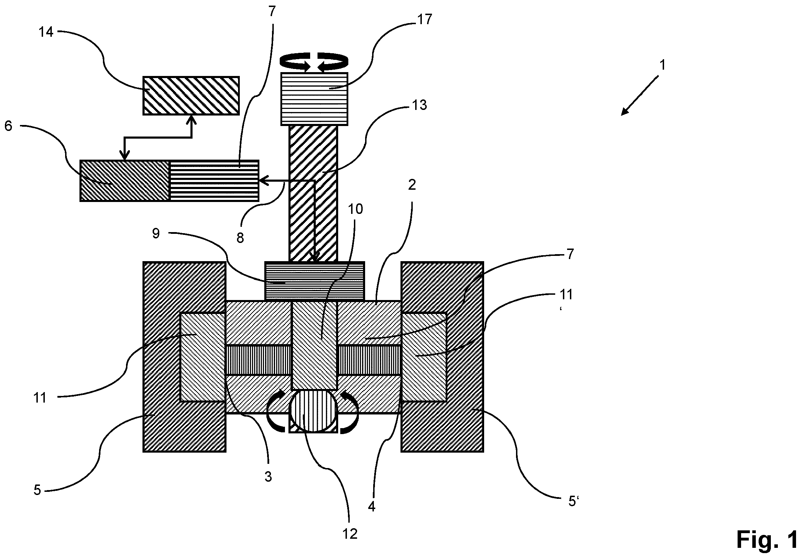

Fig. 1 zeigt in einer schematischen Darstellung ein Drehgestell 1 eines Fahrantriebs. Dieses Drehgestell 1 weist eine Schwerlastpendelachse mit einem Achskörper 2 auf, der an seinem ersten Ende 3 und seinem zweiten Ende 4 jeweils mindestens ein Rad 5, 5' aufweist. Dabei ist auch denkbar, dass nicht ein einzelnes Rad 5, 5', sondern jeweils Zwillingsräder an dem ersten Ende 3 und dem zweiten Ende 4 vorgesehen sind.

Des Weiteren ist für das Drehgestell 1 ein Elektromotor 6 sowie eine Hydraulikpumpe 7 vorgesehen, die über eine Hydraulikleitung 8 mit einem Hydraulikmotor 9 verbunden ist. Der Hydraulikmotor 9 dient als gemeinsamer Antrieb für die Räder 5, 5', wobei dem Hydraulikmotor 9 ein Getriebe 10, beispielsweise ein Differentialgetriebe, nachgeordnet ist. Aus Fig. 1 geht auch hervor, dass den Räder 5, 5' jeweils ein Getriebe 11, 11' vorgeordnet ist. Bei dem Getriebe 11, 11' kann es sich beispielsweise um ein Planetengetriebe handeln, um die benötigten hohen Drehmomente zu erreichen, die für den Transport schwerer Lasten notwendig sind.

Der Achskörper 2 ist über ein Pendellager 12 mit einer in der Figur nicht gezeigten Längsschwinge gekoppelt, die wiederum schwenkbar mit dem Lagerarm 13 gekoppelt sein kann. Der Lagerarm 13 kann beispielsweise über einen Zahnkranz 17 drehbar mit einem nicht dargestellten Fahrzeugrahmen gekoppelt sein. Sofern keine aktive Lenkung des Drehgestells 1 notwendig ist, kann auch ein Zapfen bzw. eine Zapfenaufnahme anstatt des Zahnkranzes angeordnet sein, um das Drehgestell 1 mit einem Fahrzeugrahmen drehbar zu koppeln. Um die Längsschwinge gegenüber dem Lagerarm 13 abzustützen kann ein Dämpfungsmittel, beispielsweise eine ZylinderKolben-Einrichtung, angeordnet sein.

Weiterhin wird der Elektromotor 6 beispielsweise über einen nicht dargestellten Energiespeicher, insbesondere eine Batterie, oder eine Brennstoffzelle, und einen Wechselrichter 14 mit Strom versorgt. Der Wechselrichter 14 kann als Teil einer Leistungssteuerung ausgebildet sein.

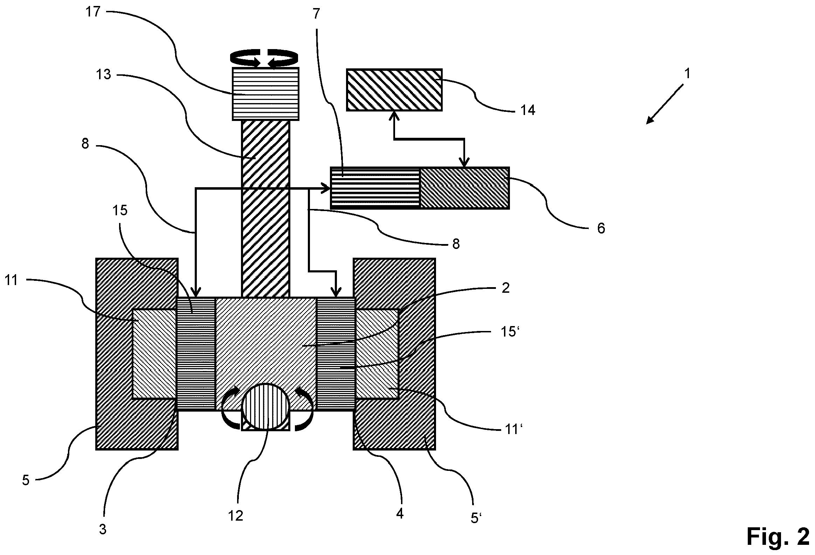

Das Ausführungsbeispiel gemäß Fig. 2 entspricht im Wesentlichen dem Ausführungsbeispiel nach Fig. 1, so dass auf die voranstehende Beschreibung Bezug genommen wird. Der wesentliche Unterschied besteht darin, dass für den Reifen 5 an dem ersten Ende 3 des Achskörpers 2 und den Reifen 5' an dem zweiten Ende des Achskörpers 2 jeweils ein separater Hydraulikmotor 15, 15' angeordnet ist. Von den separaten Hydraulikmotoren 15, 15' wird jeweils über ein Getriebe 11, 11', beispielsweise ein Planetengetriebe, das Drehmoment auf den Reifen 5, 5' übertragen. Im Gegensatz zu dem Ausführungsbeispiel von Fig. 1 ist somit kein Getriebe 11, insbesondere Differentialgetriebe, notwendig.

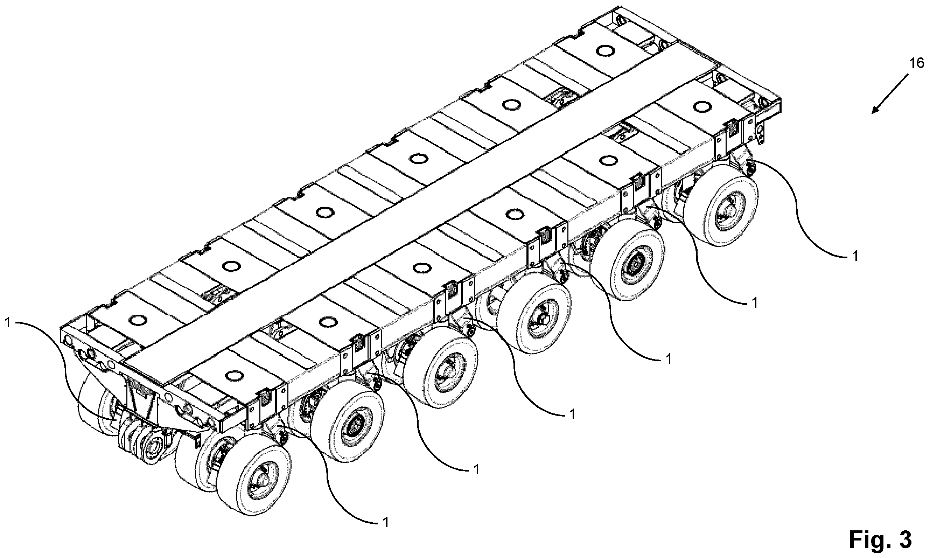

Fig. 3 zeigt ein Ausführungsbeispiel eines Transportfahrzeugs 16, wobei es sich um ein selbstangetriebenes Transportfahrzeug (sog. SPMT) handelt. Dieses weist einen erfindungsgemäßen Fahrantrieb mit mindestens zwei Drehgestellen 1 auf, insbesondere entsprechend der Anzahl der angetriebenen Schwerlastpendelachsen des Transportfahrzeugs 16.

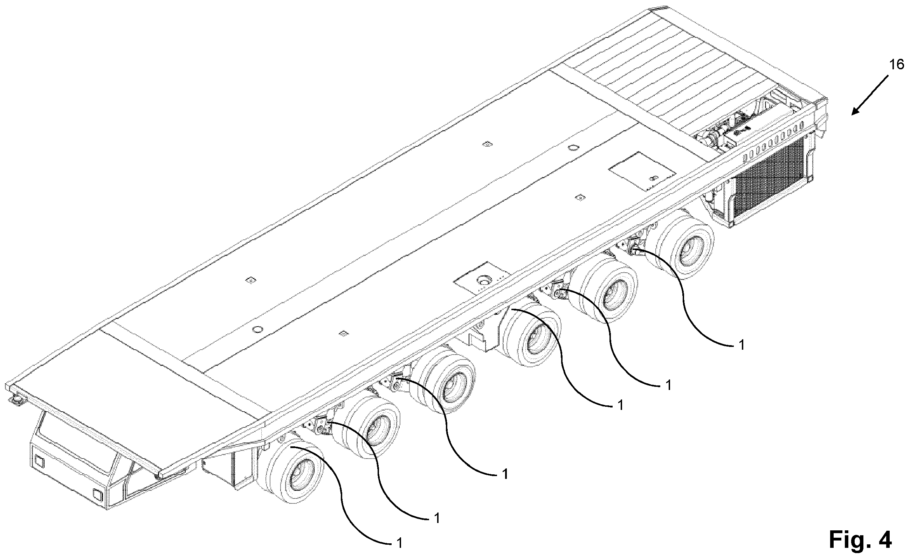

Fig. 4 zeigt ein Ausführungsbeispiel eines Transportfahrzeugs 200, wobei es sich um einen Industriehubtransport (sog. IHT) handelt. Dieser weist einen erfindungsgemäßen Fahrantrieb mit mindestens zwei Drehgestellen 1 auf, insbesondere entsprechend der Anzahl der angetriebenen Schwerlastpendelachsen des Transportfahrzeugs 16.

Es wird darauf hingewiesen, dass in den Fig. 3 und 4 jedes erkennbare Drehgestell als Drehgestell 1 eines erfindungsgemäßen Fahrantriebs gekennzeichnet ist, wobei dies nicht zwangsweise der Fall sein muss, kann nämlich auch mindestens eine Schwerlastpendelachse eines erfindungsgemäßen Fahrzeugs 16 nicht angetrieben ausgebildet sein.

Hinsichtlich weiterer vorteilhafter Ausgestaltungen der erfindungsgemäßen Vorrichtung wird zur Vermeidung von Wiederholungen auf den allgemeinen Teil der Beschreibung sowie auf die beigefügten Ansprüche verwiesen.

Schließlich sei ausdrücklich darauf hingewiesen, dass die voranstehend beschriebenen Ausführungsbeispiele der erfindungsgemäßen Vorrichtung lediglich zur Erörterung der beanspruchten Lehre dienen, diese jedoch nicht auf die Ausführungsbeispiele einschränken.

### Bezugszeichenliste

- 1: Drehgestell
- 2: Achskörper
- 3: ersten Ende
- 4: zweites Ende
- 5, 5': Rad
- 6: Elektromotor
- 7: Hydraulikpumpe
- 8: Hydraulikleitung
- 9: Hydraulikmotor
- 10: Getriebe
- 11, 11': Getriebe
- 12: Pendellager
- 13: Lagerarm
- 14: Wechselrichter
- 15, 15': Hydraulikmotor
- 16: Transportfahrzeug
- 17: Zahnkranz

## Patentansprüche

1. Fahrantrieb, insbesondere Schwerlast-Fahrantrieb, für ein Transportfahrzeug (16) mit mindestens zwei Drehgestellen (1), wobei jedes Drehgestell (1) eine Schwerlastpendelachse mit einem Achskörper (2) aufweist, wobei an einem ersten Ende (3) und an einem zweiten Ende (4) des Achskörpers (2) jeweils mindestens ein Rad (5, 5') angeordnet ist,
**dadurch gekennzeichnet, dass** für jedes Drehgestell (1)jeweils eine von einem separaten Elektromotor (6) angetriebene Hydraulikpumpe (7) und mindestens ein Hydraulikmotor (9, 15, 15') zum Antreiben mindestens eines Rades (5, 5') des Drehgestells (1) angeordnet ist, wobei die Hydraulikpumpe (7) über mindestens eine Hydraulikleitung (8) mit dem Hydraulikmotor (9, 15, 15') verbindbar ist.

2. Fahrantrieb nach Anspruch 1, **dadurch gekennzeichnet, dass** der mindestens eine Hydraulikmotor (9, 15, 15') als, vorzugsweise verstellbarer, Axialkolbenmotor ausgebildet ist.

3. Fahrantrieb nach Anspruch 1 oder 2, **dadurch gekennzeichnet, dass** die Hydraulikpumpe (7) als, vorzugsweise konstante, Axialkolbenpumpe oder als, vorzugsweise konstante, Außenzahnraddoppelpumpe ausgebildet ist.

4. Fahrantrieb nach einem der Ansprüche 1 bis 3, **dadurch gekennzeichnet, dass** ein Wechselrichter (14) angeordnet ist.

5. Fahrantrieb nach einem der Ansprüche 1 bis 4, **dadurch gekennzeichnet, dass** die Hydraulikpumpe (7) und/oder der Wechselrichter (14) und/oder der Elektromotor (6) an einem Fahrzeugrahmen angeordnet ist/sind.

6. Fahrantrieb nach einem der Ansprüche 1 bis 5, **dadurch gekennzeichnet, dass** jedes Drehgestell (1) einen gemeinsamen Hydraulikmotor (9) als gemeinsamen Antrieb für die an dem ersten Ende (3) und dem zweiten Ende (4) des Achskörpers (2) angeordneten Räder dieses Drehgestells (1) aufweist.

7. Fahrantrieb nach Anspruch 6, **dadurch gekennzeichnet, dass** dem gemeinsamen Hydraulikmotor (9) ein Getriebe (10), insbesondere ein Differentialgetriebe, nachgeordnet ist.

8. Fahrantrieb nach einem der Ansprüche 1 bis 5, **dadurch gekennzeichnet, dass** für jedes Drehgestell (1) ein separater Hydraulikmotor (15, 15') für das mindestens eine an dem ersten Ende (3) des Achskörpers (2) angeordnete Rad (5, 5') vorgesehen ist und ein separater Hydraulikmotor (15, 15') für das mindestens eine an dem zweiten Ende (4) des Achskörpers (2) angeordnete Rad (5, 5') vorgesehen ist.

9. Fahrantrieb nach einem der Ansprüche 1 bis 8, **dadurch gekennzeichnet, dass** dem mindestens einen Rad (5, 5') an dem ersten Ende (3) des Achskörpers (2) ein Getriebe (10, 10') vorgeordnet ist und dass dem mindestens einen Rad (5, 5') an dem zweiten Ende (4) des Achskörpers (2) ein Getriebe (10, 10') vorgeordnet ist.

10. Transportfahrzeug (16), insbesondere selbstangetriebenes Transportfahrzeug (16), mit mindestens einem Fahrantrieb nach einem der Ansprüche 1 bis 9.
